# EUROPÄISCHE PATENTSCHRIFT

(11) **EP 1 293 727 B1**
(45) Veröffentlichungstag und Bekanntmachung des Hinweises auf die Patenterteilung: **23.11.2005**
(21) Anmeldenummer: 01122047.2
(22) Anmeldetag: 13.09.2001
(51) Int. Cl.: F23N 1/02, F23N 5/12, G05B 23/02

(54) **Regeleinrichtung für einen Brenner und Einstellverfahren**
Control apparatus for a burner and a method for adjustment
Appareil de commande d'un brûleur et méthode de réglage

(43) Veröffentlichungstag der Anmeldung: 19.03.2003
(73) Patentinhaber: Siemens Schweiz AG, 8047 Zürich (CH)
(72) Erfinder: Lochschmied, Rainer, Dr., 76287 Rheinstetten (DE)
(74) Vertreter: Weise, Wolfgang

(56) Entgegenhaltungen:
- EP-A- 0 770 824
- DE-A- 4 429 157
- DE-C- 10 003 819
- DE-C- 19 854 824

## Beschreibung

Die Erfindung bezieht sich auf eine Regeleinrichtung für einen Brenner gemäss dem Oberbegriff des Anspruchs 1, und auf ein Verfahren zum Einstellen einer Regelverfahren nach dem Oberbegriff des Anspruchs 7.

Die Regeleinrichtung sorgt dafür, dass in einem Brenner das Verhältnis der Luftmenge zur Brennstoffmenge, Luftzahl oder Lambda genannt, im gesamten Leistungsbereich abgestimmt ist. In der Regel soll Lambda leicht über dem stöchiometrischen Wert 1 sein, zum Beispiel 1,3.

Luftzahlgeregelte Brenner reagieren, anders als gesteuerte Brenner, auf äußere Einflüsse, welche die Verbrennung verändern. Beispielsweise kann die Verbrennung nach einer Änderung der Brennstoffart oder der Luftdichte nachgeregelt werden. Sie hat einen höheren Wirkungsgrad, damit eine höhere Effizienz sowie niedrigere Schadstoff- und Russemissionen. Die Umweltbelastung ist geringer, die Lebensdauer wird verlängert.

Luftzahlgeregelte Brenner reagieren aber nicht korrekt auf alle Einwirkungen, welche die Verbrennung verändern, abhängig von ihrem Aufbau. Die Regelung kann deswegen früher oder später ungenau werden. Dies macht eine regelmäßige Überwachung oder Kalibrierung vorteilhaft.

So ist typisch eine Kalibrierung dadurch gefordert, dass der Luftwiderstand im Luftzufuhr- oder Abgaskanal sich durch Russemissionen oder Fremdkörper vergrößert. Eher selten, aber gleichermaßen betroffen ist der umgekehrte Fall, in dem der Luftwiderstand kleiner wird durch ungewollte Löcherung der Kanäle. Oft wird nämlich der Luftzufluss von einem externen Leistungssignal bestimmt und die Regeleinrichtung regelt den Brennstoffzufluss auf einen damit korrespondierenden Regelsollwert ab, auch wenn der wirkliche Luftzufluss mit dem Leistungssignal nicht mehr übereinstimmen sollte.

Manch großer Brenner erfasst zwar zum Beispiel über Drucksensoren den Luftvolumenstrom und kann so deren Abänderung gewissermaßen ausregeln. Früher oder später aber wird auch das Sensorergebnis nicht mehr zuverlässig sein. Einfache Brenner verlassen sich ausschließlich auf die von einem Hallsensor erzeugte Luftgebläsedrehzahl oder auf die sich aus einer elektrischen Widerstandsmessung ergebende Stellung einer Klappe oder sogar nur auf das jeweilige Stellsignal.

DE-A1-4429157 zeigt ein Überwachungsverfahren für eine Luftzahlregelung. Dabei wird die Änderung eines zweiten Parameters als Folge der Änderung eines ersten Parameters beobachtet, nämlich den geänderten Wert des Sensorsignals in Antwort auf einer angesteuerten, festen Änderung eines Aktors. Aus der Differenz dieser Beobachtung und gespeicherter Referenzwerten wird entschieden, ob eine Fehlermeldung ausgegeben wird.

Es ist in DE-A1-4429157 nicht spezifiziert worden, für welche Sensorarten das Überwachungsverfahren geeignet ist. Speziell für Brenner, in den der Sensor für die Luftzahlregelung durch die lonisationselektrode gebildet wird, hat der selbe Patentanmelder später ein völlig anderes Kalibrierungsverfahren beschrieben. Dies findet man in EP-A2-1002997 und wird unterstehend erläutert.

Eine Regelung der Luftzahl ist besonders effektiv, wenn mit einem Sensor die Qualität der Verbrennung direkt oder indirekt beobachtet werden kann. Typisch werden bei bekannten Brennern Sauerstoffsensoren im Abgaskanal, Temperatursensoren auf der Brenneroberfläche oder UV-Sensoren in der Brennkammer verwendet. Diese Sensoren sind aber für diesen Zweck teuer, unzuverlässig, pflegebedürftig und / oder haben eine geringe Lebensdauer.

Neuere Entwicklungen basieren auf der lonisationselektrode, die schon lange standardmäßig zur Überwachung der Flamme in Brennern eingesetzt wird. Obwohl es nicht leicht ist, ihr Signal auszuwerten, weist die lonisationselektrode obengenannte Nachteile nicht auf.

Auch etwaigen Änderungen der lonisationselektrode erfordern typisch eine Kalibrierung. Sie kann durch Verbiegung, Abnutzung oder chemische Einwirkung auf ihre Oberfläche, oder durch Verschmutzung mit Russpartikeln, verändert werden. Dann versucht die Regeleinrichtung die Verbrennung fälschlich so zu gestallten, dass auf Messungen an einer ungeänderten lonisationselektrode basierende Regelsollwerte eingehalten werden.

Gemäss EP-B1-770824 wird zur Kalibrierung eines ionisationsstromgeregelten Brenners bei einem festen Brennstoffvolumenstrom der Luftzufuhr von ihrem ausgeregelten Wert her verringert, vorbei an dem Punkt, in dem das lonisationssignal seinem stöchiometrischen Maximum erreicht. Dieses Maximum wird festgestellt. Die Differenz zwischen dem neu festgestellten und dem gespeicherten vorherigen Maximum erlaubt es der Brennerregelung neue lonisationssollwerte für die Verbrennung bei der erwünschten Luftzahl zu bestimmen.

Dieses Verfahren ermöglicht es durch zunehmend fettere Verbrennung einfach und zuverlässig einen Messwert festzulegen, ohne dass es eine Rolle spielt, bei welcher Luftzufuhr dieser Messwert erreicht wird oder wie das lonisationssignal genau von der Luftzufuhr abhängt.

Auch in EP-A2-1002997 und DE-C1-19854824 sind Kalibrierungsverfahren für ionisationsstromgeregelte Brenner beschrieben worden. Diese schließen die Erfassung eines zweiten Messsignals ein, welches für die aktuelle Leistung repräsentativ ist, wenn auch in Zusammenhang mit dem lonisationssignal. Das zweite Messsignal ist in DE-C1-19854824 immer, in EP-A2-1002997 insbesondere ein zweites, andersartiges lonisationssignal.

In DE-C1-19854824 wird offensichtlich davon ausgegangen, dass das zweite lonisationssignal im Sinne einer Messung des thermischen Elektronenaustrittes aus dem lonisationselektrode kaum empfindlich für die momentane Größe der Brennerleistung ist. Ähnlich ist laut EP-A2-1002997 ein zweites lonisationssignal erzeugbar, das unterschiedlich vom ersten von der Brennerleistung und der Luftzahl abhängt, sogar mit Hilfe einer speziellen Auswerteschaltung überhaupt nicht mehr von der Brennerleistung abhängig sei.

Die bekannten Kalibrierungsverfahren ändern vorerst den normalen Brennerbetrieb nicht. ES wird lediglich überprüft, ob die Brennerleistung und die Luftzahl aus den unterschiedlichen lonisationssignalen noch immer mit einander im Einklang sind. Wenn dies zutrifft, dann bleibt das Regelungsverfahren ungeändert. Nur wenn gewisse Schwellwerte überschritten worden sind, wird es angepasst.

Eine Regelungsanpassung findet in DE-C1-19854824 dadurch statt, dass der vom Leistungssignal bestimmte Zufluss, beispielsweise der Luftzufluss, solange geändert wird bis das zweite lonisationssignal wieder einen akzeptablen Wert aufweist. Inzwischen wird der andere Zufluss genau wie zuvor nachgeregelt. Dadurch sollen fehlerhafte Änderungen der Luftzahl und der Brennerleistung rückgängig gemacht werden. Sobald ein stabiler Zustand erreicht ist, wird das erste lonisationssignal gemessen. Schließlich wird dieser Messwert als neuer Sollwert für das erste lonisationssignal angenommen.

Solange das zweite Messsignal zuverlässig ist, können diese Verfahren ohne jede Beeinflussung der Regelung überprüfen, ob die korrekte Luftzahl vorliegt. Die für eine etwaige Regelungsanpassung benötigte Änderungen werden sofort wirksam, weil sie lediglich auf der Annäherung zum festen Wert des zweiten Messsignals oder zu dessen erwünschter Beziehung zum lonisationssignal auszurichten sind.

Der Erfindung liegt die Aufgabe zugrunde, eine Regeleinrichtung zu ermöglichen, welche eine zuverlässige und genaue Kalibrierung ohne große Schwankungen der Luftzahl durchführt.

Die genannte Aufgabe wird erfindungsgemäß durch die Merkmale des Anspruchs 1 gelöst.

Als Brenner kommen Brenner unterschiedlichster Bauart in Frage, zum Beispiel Vormisch-Gasbrenner oder atmosphärische Brenner mit oder ohne Hilfsgebläse. Bei atmosphärischen Brennern ohne Hilfsgebläse kann der Luftvolumenstrom zum Beispiel über eine Luftklappe oder ähnlich gesteuert werden.

Der erste Parameter, der während einer Kalibrierung geändert wird, ist beispielsweise ein Sollwert für die Regelung, dass heißt, ein Regelsollwert. Alternativ kann ein sonstiger Regelparameter, das Auswertungsergebnis eines zusätzlichen Messsignals, u.s.w. gewählt worden sein.

Beispielsweise ist der erste, sowohl als der zweite Parameter Teil des normalen Regelkreises. Ebenso aber kann der Regelkreis in einer Stelle nach dem zweiten und vor dem ersten Parameter unterbrochen sein.

In einer vorteilhaften Weiterbildung der Erfindung wird der zweite Parameter während seiner Änderung durch die lonisationselektrode beeinflusst.

Die lonisationselektrode hat sich auch für diesen Zweck als geeigneter Sensor erwiesen, sogar für eine den Zustand korrigierenden Kalibrierung, obwohl sie außerhalb vom erwünschten Luftzahlbereich an Genauigkeit einbüßt. In der Alternative wird für die Kalibrierung ausschließlich einen zusätzlichen Zustandsensor, wie eine zweite lonisationselektrode oder einen Sauerstoffsensor, benutzt.

Zur Durchführung einer Kalibrierung nach der Erfindung ändert vorteilhaft die Kalibriereinheit aus eigener Initiative den ersten Parameter. In der Alternative wartet sie, bis sich eine geeignete Änderung im Normalbetrieb ergibt, beispielsweise durch ein schrittartiges Ansteigen des externen Leistungssignals. Dann wird der erste Parameter während der Änderung des zweiten Parameters vorteilhaft konstant gehalten. Abhängig von dem Aufbau der Regeleinrichtung können aber alternative Verhalten gefragt sein.

Zudem bestimmt die Kalibriereinheit ein zu erwartendes Maß für den zweiten Parameter und dessen Differenz mit dem tatsächlich festgestellten Maß. Mit Hilfe von einer oder vorteilhaft mehreren solchen Differenzwerten bestimmt sie dann gewisse Größen neu. Dazu können auch Differenzwerte, die schon während einer früheren Kalibrierung bestimmt worden sind, benutzt werden. Vorteilhaft gewichtet die Kalibriereinheit die Differenzwerten dann so, dass jüngere schwerer mitwiegen als alte.

Sollte sich dabei die bisherige Regelung als dermaßen gut erwiesen haben, dass kein Anpassungsbedarf besteht, bestimmen gewisse Kalibriereinheiten nach der Erfindung die Größen dadurch neu, dass sie sie belassen.

Zeigen stattdessen die in einer Kalibrierung erworbene Informationen, dass der bisherige Betrieb unsicher oder inakzeptabel ist, so erzeugen gewisse erfindungsgemäße Kalibriereinheiten durch Änderung von entsprechenden Größen ein Störsignal, oder schalten den Brenner ab. In diesem breiten Sinne kann man eine Kalibrierung nicht nur als Korrektur, sondern zudem oder sogar ausschließlich als Überwachung des Brennerbetriebes betrachten.

Falls aber eine Anpassungsmöglichkeit festgestellt wird, so bestimmen gewisse erfindungsgemäße Kalibriereinheiten einen gespeicherten Regelsollwert neu, deren Größe in der spezifischen Regeleinrichtung im Normalbetrieb angenommen oder angesteuert wird. Dies kann in Form einer gesteuerten Korrektur oder einer übergeordneten Regelung erfolgen. Es wird damit vor allem bezweckt, die Luftzahl zu ihrem früheren, gewünschten Wert zu korrigieren. Idealerweise wird auch die vom Brenner gelieferte Leistung rückgängig korrigiert, einfachere Varianten der Erfindung tun dies jedoch nicht in allen Fällen.

In Regeleinrichtungen nach der Erfindung sind Kenndaten für die Bestimmung eines Verhaltens des lonisationssignals als Funktion des Leistungssignals gespeichert. Eine solche Regeleinrichtung erzeugt einen dem Verhalten entsprechenden lonisationssollwert und ihr Regler regelt mit dem Stellsignal das lonisationssignal darauf hin ab. Die Neubestimmung des Ionisationssollwerts geschieht dann beispielsweise dadurch, dass ein vom Leistungssignal abhängiger oder ein konstanter Wert aufaddiert oder subtrahiert wird. Die Größe dieses Wertes wird durch eine Funktion von den vorher bestimmten Differenzwerten festgelegt, oder aber durch eine übergeordnete Regelung, welche die in Kalibrierungen ermittelten Differenzwerten iterativ zu reduzieren versucht.

Vorher ist schon erwähnt worden, dass die Regeleinrichtung nach der Erfindung das zu erwartende Maß für die Änderung des zweiten Parameters bestimmt, was anhand von gespeicherten Kenndaten geschieht. Es hat sich gezeigt, dass diese Kenndaten in der Regel brennertypspezifisch sind. Man ermittelt oder berechnet sie in einem Einstellverfahren mit einem oder wenigen Brennern und speichert Kopien in Regeleinrichtungen für den selben Brennertyp. Dies schließt nicht aus, dass bei Inbetriebnahme noch eine individuelle Feinabstimmung stattfindet, beispielsweise zur Justierung von konstruktiven Toleranzen.

In einer vorteilhaften Weiterbildung der Erfindung umfassen die Kenndaten zur Bestimmung des zu erwartenden Maßes Kenndaten zur Bestimmung von zu erwartenden Verhalten des zweiten Parameters bei unterschiedlichen Verbrennungsgehalte von Brennstoff und Luft.

Der Verbrennungsgehalt der Luft wird durch ihren Sauerstoffgehalt bestimmt. Dieser hängt vom Luftdruck, von der Lufttemperatur und von der Luftfeuchte ab. Der Verbrennungsgehalt des Brennstoffes betrifft seinem spezifischen Energieinhalt. Während dem Brennerbetrieb und von einer Kalibrierung zu der andere kann der Verbrennungsgehalt von sowohl Brennstoff als auch Luft Schwankungen aufzeigen. Wenn die Regeleinrichtung jedoch den während der Kalibrierung herrschenden Verbrennungsgehalt berücksichtigt, kann sie das zu erwartende Maß für die Änderung des zweiten Parameters wesentlich besser bestimmen.

Insbesondere können die Verhalten des zweiten Parameters dessen zu erwartenden Änderungen nach einer bestimmten Änderung des ersten Parameters sein, und zwar bei unterschiedlichen aber je stabilen Verbrennungsgehalten von Brennstoff und Luft.

In einer vorteilhaften Weiterbildung der Erfindung bringt die Kalibriereinheit vor ihren respektiven Änderungen den ersten Parameter und den zweiten Parameter auf ihre respektiven Anfangswerte, welche also von den im normalen Betrieb unterschiedlich sind. Dadurch können die Änderungen der Parameter zum Zwecke größerer Empfindlichkeit auf einem optimalen Arbeitspunkt eingestellt werden. Beispielsweise wird vorher der erste Parameter auf seinem Anfangswert gebracht, und abgewartet bis der zweite durch den normalen Regelkreis auf seinen entsprechenden Anfangswert gebracht worden ist.

In einer vorteilhaften Weiterbildung der Erfindung umfassen die neu zu bestimmenden Größen einen in der Regeleinrichtung gespeicherten Anfangswert für den ersten Parameter.

Somit kann eine übergeordnete Regelung dadurch entstehen, dass je während der nächstfolgenden Kalibrierung verbesserte Anfangssollwerte vorliegen. Vorteilhaft gewichtet die Kalibriereinheit die Anfangswerte so, dass jüngere schwerer mitwiegen als alte. Nach einigen Malen kann dann die Kalibriereinheit sonstige Größen neu bestimmen. Zum Beispiel findet eine Korrektur statt, in der durch Anpassung der Ionisationssollwerte unter Kalibrierungsumstände ein fester Unterschied zwischen dem ausgebesserten Anfangswert und dem ersten Regelparameters wiederhergestellt wird.

In einer vorteilhaften Weiterbildung der Erfindung umfassen die neu zu bestimmenden Größen einen Regelsollwert, der die Abhängigkeit des Reglers vom Leistungssignal beeinflusst.

Mit einem Leistungssignal ist ein Signal gemeint, das die angeforderte Leistung repräsentiert. Diese Weiterbildung ermöglicht eine Korrektur der Leistung im Falle einer nicht von der Regelung kompensierten Abänderung des Zuflusses von Luft oder Brennstoff.

Die Erfindung bezieht sich zudem auf ein Verfahren zum Einstellen einer Regeleinrichtung für einen Brenner.

Üblicherweise umfasst das Einstellverfahren Messungen an einem Brenner, dessen Verbrennung wunschgemäss verläuft. Die Messergebnisse können durch Abschätzungen, welche auf fachmännischen Kenntnissen über dem Brennertyp basieren, ergänzt werden.

Die obenstehenden Überlegungen über den ersten Parameter, den zweiten Parameter und deren Änderungen haben auch hier Geltung.

Bei der Einstellung von Regeleinrichtungen nach der Erfindung kann man so Kenndaten zur Bestimmung des zu erwartenden Maßes für die Änderung eines zweiten Parameters während einer Kalibrierung herleiten. Dabei beobachtet man das Verhalten des Brenners unter sich wechselnden Umständen, welche den Parameteränderungen während der Kalibrierung ähneln, ihr jedoch nicht unbedingt entsprechen.

Die so hergeleiteten Kenndaten kann man in weitere erfindungsgemäßen Regeleinrichtungen speichern.

In einer vorteilhaften Weiterbildung der Erfindung betreibt man den Brenner zumindest einmal auch mit einem Brennstoff mit einem unterschiedlichen Verbrennungsgehalt.

Vorteilhaft weicht der spezifische Energieinhalt nach dem Wechsel des Brennstoffes um mindestens 2 % ab.

Das Einstellverfahren kann aber auch dazu dienen, etwaige Korrekturmaßnahmen während einer Kalibrierung zu verfeinern. Dazu werden Messungen an modifizierten Brennern durchgeführt, die in gewissen Aspekten einer Korrektur bedürfen. Beispielsweise wurde dabei die lonisationselektrode durch ein Exemplar mit sehr langer Betriebszeit ersetzt oder zur deren Simulation ein zusätzlicher Widerstand seriell zur lonisationselektrode geschaltet. Weitere Beispiele betreffen deren Verbiegung oder Bedeckung mit einem Belag oder die Installation eines erheblichen Strömungswiderstands im Luftzufuhrkanal.

In einer vorteilhaften Weiterbildung der Erfindung stellt man den Brenner zumindest einmal vor dem Betrieb so ein, dass die Verbrennung vor der Änderung des ersten Parameters nicht mehr die erwünschte Luftzahl aufweist und / oder die erwünschte Leistung erzeugt. Am Ende eines solchen Betriebs verbessert man die Verbrennung dadurch, dass man einen Regelsollwert neu bestimmt.

Dann kann man aus dem neu bestimmten Regelsollwert Kenndaten zur Neubestimmung von Größen während einer Kalibrierung herleiten.

In einer vorteilhaften Weiterbildung der Erfindung stellt man den Brenner vor dem Betrieb dadurch ein, dass man einen zusätzlichen Widerstand in Serie zu der Ionisationselektrode schaltet.
- Figur 1: zeigt ein Blockschaltbild eines lonisationsauswerters in einer Regeleinrichtung gemäss der Erfindung,
- Figur 2: zeigt ein Blockschaltbild der Regeleinrichtung und
- Figur 3: zeigt zu erwartende Verhalten des Stellsignals der Regeleinrichtung bei vier verschiedenen Verbrennungsgehalten und bei unterschiedlichen Luftzahlen.

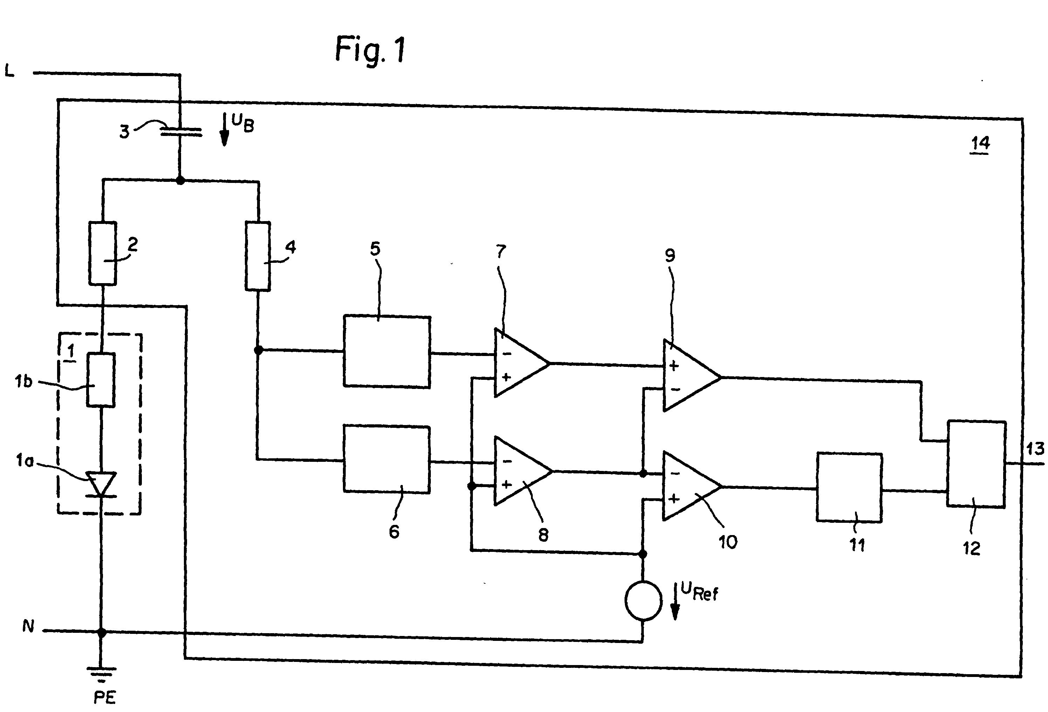

Figur 1 zeigt schematisch das Funktionsprinzip eines lonisationsauswerters 14 in einer Regeleinrichtung gemäss der Erfindung. In einer Ersatzschaltung ist die Flamme 1 durch eine Diode 1a und einen Widerstand 1b dargestellt. Über L und N ist eine Wechselspannung von beispielsweise 230V angelegt. Wenn eine Flamme 1 vorhanden ist, fließt wegen der Flammendiode 1a durch einen Blockkondensator 3 in der positiven Halbwelle ein größerer Strom als in der negativen Halbwelle. Dadurch bildet sich zwischen L und einem zum Zweck des Berührschutzes angebrachten Widerstandes 2 eine positive Gleichspannung U_{B} am Blockkondensator 3 aus.

Durch einen Entkopplungswiderstand 4 fließt daher ein Gleichstrom von N zum Blockkondensator 3. Die Höhe des Gleichstromes hängt dabei von U_{B} und damit direkt vom Flammenwiderstand 1b ab. Der Flammenwiderstand 1b beeinflusst ebenfalls den Wechselstrom durch den Entkoppelwiderstand 4, allerdings in unterschiedlichem Maß gegenüber dem Gleichstrom. Durch den Widerstand 4 fließt somit ein Gleichstrom und ein Wechselstrom wie oben beschrieben.

Dem Widerstand 4 sind nun ein Hochpass 5 und ein Tiefpass 6 nachgeschaltet. Durch den Hochpass 5 wird der Wechselstrom ausgefiltert und der Gleichspannungsanteil abgeblockt. Durch den Tiefpass 6 wird der vom Flammenwiderstand 1 b abhängige Gleichspannungsanteil ausgefiltert und der Wechselstrom im wesentlichen abgeblockt. In einem Verstärker 7 wird der aus dem Hochpass 5 fließende Wechselstrom verstärkt und eine Referenzspannung U_{Ref} zuaddiert. In einem Verstärker 8 wird der aus dem Tiefpass 6 fließende Gleichstrom mit eventuell geringen Wechselstromanteilen verstärkt und die Referenzspannung U_{Ref} zuaddiert.

Die Referenzspannung U_{Ref} kann beliebig, zum Beispiel U_{Ref} = 0 gewählt werden, sie wird jedoch vorzugsweise so gewählt, dass die Verstärker und Komparatoren nur eine Versorgung benötigen.

An einem Komparator 9 werden die aus dem Verstärker 7 austretende Wechselspannung und die aus dem Verstärker 8 austretende Gleichspannung miteinander verglichen und ein pulsweitenmoduliertes (PWM) Signal erzeugt. Ändert sich die Amplitude der Netzspannung, so ändern sich Wechselspannung und Gleichspannung im gleichen Verhältnis, das PWM-Signal ändert sich nicht. Der Signalhub des PWM-Signals kann mittels der Verstärker 7 und 8 in einem weiten Bereich zwischen τ = 0 und τ = 50% Tastverhältnis eingestellt werden.

Der Gleichspannungsanteil U= wird in einem Komparator 10 mit der Referenzspannung U_{Ref} verglichen. Ist eine Flamme vorhanden, ist der Gleichspannungsanteil größer als die Referenzspannung (U₌ > U_{Ref}) und der Komparatorausgang des Komparators 10 schaltet auf 0. Ist keine Flamme vorhanden, so ist der Gleichspannungsanteil ungefähr gleich der Referenzspannung (U₌ ≈ U_{Ref}). Wegen dem, dem Gleichspannungsanteil überlagerten, geringen Wechselspannungsanteil, den der Tiefpass 6 nicht ausfiltert, unterschreitet der Gleichspannungsanteil kurzzeitig die Referenzspannung und am Komparatorausgang des Komparators 10 erscheinen Impulse. Diese Impulse werden auf ein nachtriggerbares Monoflop 11 gegeben.

Das Monoflop 11 wird so getriggert, dass die aus dem Komparator 10 ausgegebene Impulsfolge schneller kommt als die Impulsdauer des Monoflops ist. Dadurch erscheint, wenn keine Flamme vorhanden ist, am Ausgang des Monoflops konstant eine 1. Ist eine Flamme vorhanden, so wird das Monoflop nicht getriggert und am Ausgang erscheint permanent eine 0. Das nachtriggerbare Monoflop 11 bildet somit einen "missing pulse detector", welcher das dynamische Ein-/Aus-Signal in ein statisches Ein-/Aus-Signal umwandelt.

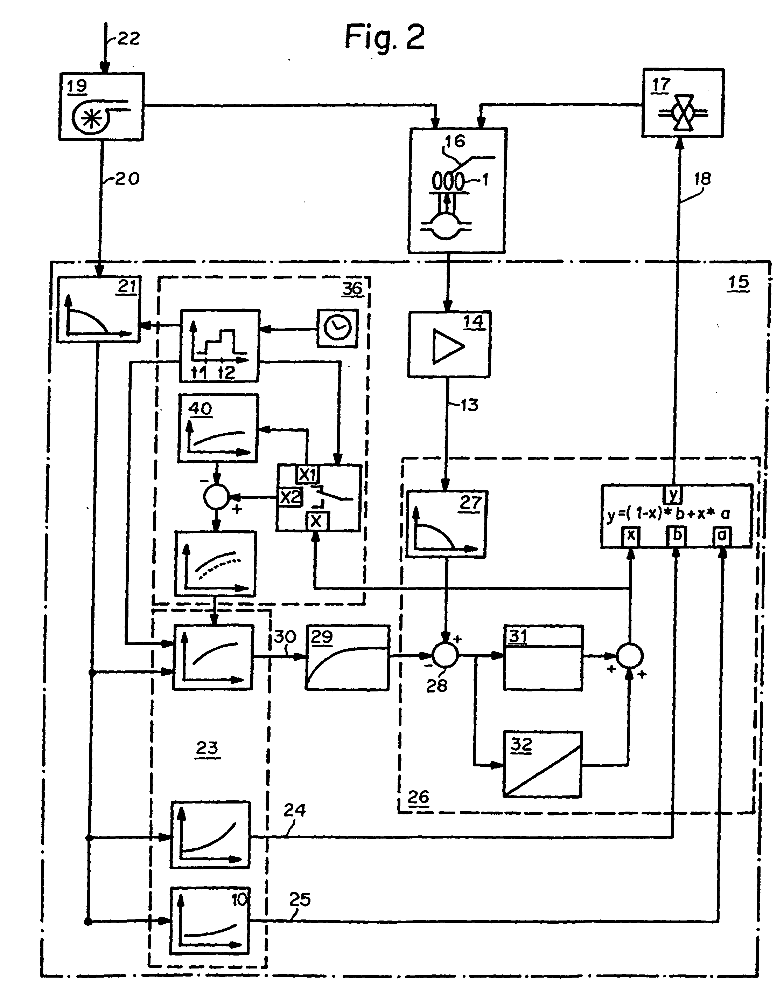

Beide Signale, das PWM-Signal und das Flammensignal können nun separat weiterverarbeitet werden oder aber mittels eines Oder-Gliedes 12 verknüpft werden. Als Ausgang des Oder-Gliedes 12 zeigt sich bei vorhandener Flamme ein PWM-Signal, dessen Tastverhältnis ein Maß für den Flammenwiderstand 1b ist. Dieses lonisationssignal 13 wird einem in Figur 2 gezeigten Regler 26 zugeführt. Ist keine Flamme vorhanden, ist der Ausgang des Oder-Gliedes 12 permanent auf 1. Das lonisationssignal 13 kann über einen nicht dargestellten Optokoppler übertragen werden, um eine Schutztrennung zwischen der Netzseite und der Schutzkleinspannungsseite zu erreichen.

Figur 2 zeigt schematisch ein Blockschaltbild einer Regeleinrichtung 15 gemäss der Erfindung.

Eine lonisationselektrode 16 ragt in die Flamme 1. Ein Gasventil 17 wird von einem Stellsignal 18 auf direkte oder indirekte Weise, zum Beispiel über einen Motor, gesteuert. Alternativ ist noch ein mechanischer Druckregler zwischengeschaltet.

Ein Luftgebläse 19 wird auf eine Drehzahl angesteuert, die hier als Eingabeparameter verwendet wird. Es wird angenommen, dass die Drehzahl einer Leistungsanforderung 22 entspricht. Ein Drehzahlsignal 20 wird über ein Filter 21 zu einer Steuereinheit 23 geführt, welche als Programmteil zum Ablauf in einem Mikroprozessor gestaltet worden ist. Dort sind Kenndaten gespeichert, welche die Kennlinien eines ersten und eines zweiten Steuersignals 24 und 25 festlegen. Ein Regler 26 gewichtet und addiert die beide Steuersignale und ermittelt so das Stellsignal 18. Diese Verarbeitung der Steuersignale hängt vom lonisationssignal 13 ab.

Das lonisationssignal 13 wird vom Regler 26 zuerst mittels eines Tiefpassfilters 27 geglättet, um Störimpulse und Flackern zu unterdrücken. In einer Vergleichseinheit 28 wird ein von der Steuereinheit 23 erzeugtes und über eine Korrektureinheit 29 geführtes Sollwertsignal 30 subtrahiert. Aus dem Folgesignal dieser Verarbeitung des lonisationssignals wird von einem Proportionalregler 31 und einer parallelen Integriereinheit 32 ein interner Regelwert x ermittelt, der die beiden Steuersignale 24 und 25 gewichtet und damit das Stellsignal 18 fein abregelt.

Der Regelwert x kann alternativ durch einen PID-Regler oder einen Zustandsregler aus dem Folgesignal erzeugt werden.

Der Regelwert x wird zudem als Maß für das Stellsignal 18 einer Kalibriereinheit 36 zugeführt.

Die Kalibriereinheit 36 umfasst eine Uhr, welche in regelmäßiger Periode Kalibrierungen auslöst. Wann es wieder so weit ist, bringt die Kalibriereinheit 36 zuerst die Luftgebläsedrehzahl auf einen festen, vorgegebenen Wert und erhöht in einem festen, vorgegebenen Schritt das Sollwertsignal 30 um das System in ein empfindliches Arbeitsgebiet leicht näher am stochiometrischen Verbrennungspunkt zu bringen.

Danach erfasst sie den eingeschwungenen Regelwert x als Indiz für den momentanen Verbrennungsgehalt von Brennstoff und Luft.

Dann erhöht die Kalibriereinheit 36 das Sollwertsignal 30 in einem zweiten, vorgegebenen Schritt nochmals. Dies bildet die für die Erfindung wesentliche Änderung eines ersten Parameters, nämlich des Sollwertsignals 30. In Antwort darauf wird der Regler 26 das Stellsignal 18 durch Reduzieren des Regelwertes x auf einem noch etwas fetteren Verbrennung ausregeln.

Nach 12 Sekunden, wenn der Regelwert x wieder eingeschwungen ist, wird er erneut erfasst. Der Vergleich mit seinem Anfangswert bildet die Änderung eines zweiten Parameters, nämlich des Regelwertes x.

Die Kalibriereinheit 36 berechnet anhand von gespeicherten Kenndaten einen Erwartungswert 40 für den geänderten Regelwert x unter dem herrschenden Verbrennungsgehalt, und subtrahiert ihn dem tatsächlich geänderten Regelwert x. Eine etwaige Differenz ist ein Indiz dafür, dass die Luftzahl im Normalbetrieb nicht ihren erwünschten Wert hatte und die Verbrennung zu mager oder zu fett war.

Der Erwartungswert 40 für den geänderten Regelwert x entsteht durch Aufaddierung seines Anfangswerts und seiner zu erwartender Änderung. Die zu erwartende Änderung des Regelparameters x folgt wieder aus einer Polynomentwicklung dritter Ordnung seines Anfangwertes, deren Konstanten in einem Einstellverfahren für den Brennertyp ermittelt und als Kenndaten in der Regeleinrichtung gespeichert wurden.

Die Kalibriereinheit 36 mittelt jetzt durch eine exponentielle Gewichtung den Differenzwert mit dem Mittelwert der Differenzwerte aus den früheren Kalibrierungen, und zwar so dass die jüngere schwerer mitwiegen als die ältere.

Sollte der so neu bestimmte Mittelwert gewisse Schwellwerte überschreiten, so wird die Kalibriereinheit 36 einen Notbetrieb anzeigen, oder sogar den Betrieb abschalten.

Wenn nicht, dann passt die Kalibriereinheit 36 bei einem Überschreiten eines tieferen Schwellwertes die Erzeugung des Sollwertsignals 30 in der Steuereinheit 23 an, in dem sie bei jedem Drehzahlsignal 20 einen kleinen Wert aufaddiert oder aber subtrahiert. Nachher soll deswegen die Verbrennung im Normalbetrieb ein wenig fetter oder magerer gestaltet sein.

Stattdessen modifiziert eine alternative Kalibriereinheit nach der Erfindung gleichermaßen die beiden Schritte, in dem anfangs der nächsten Kalibrierung das Sollwertsignal 30 erhöht wird. Erst in jeder zehnten Kalibrierung passt sie dann aufgrund von deren somit verbesserten Werten die Erzeugung des Sollwertsignals 30 in der Steuereinheit 23 an.

Durch Wiederholung wird sich die Luftzahl im Normalbetrieb iterativ auf ihren erwünschten Wert hin bewegen.

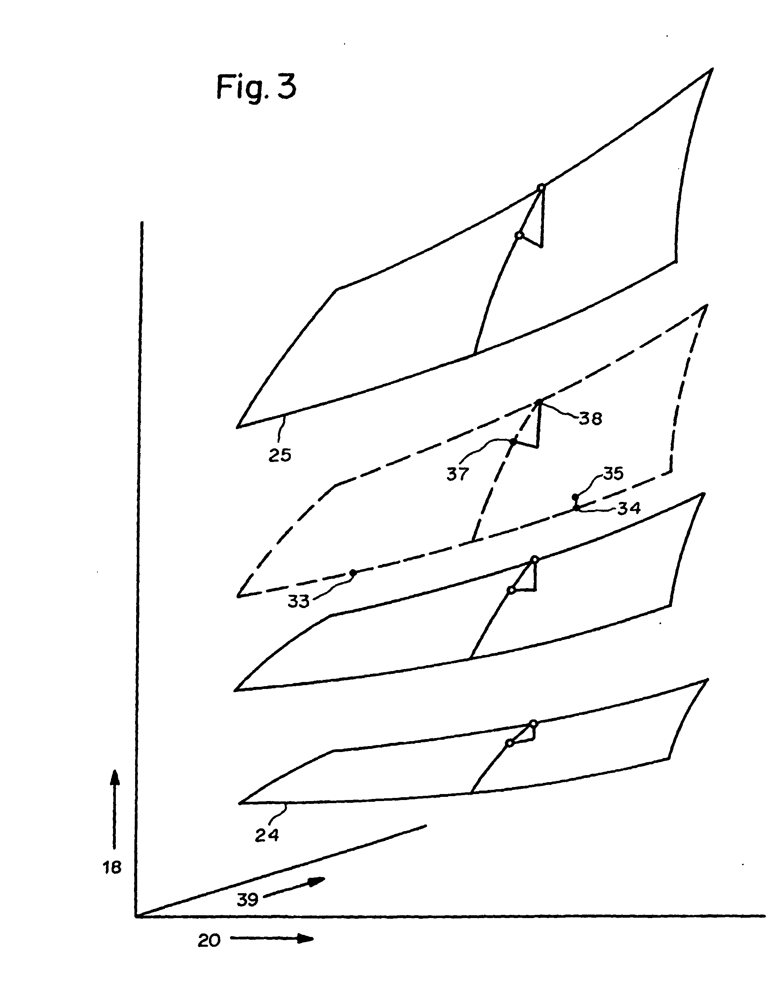

Figur 3 zeigt schematisch das Verhalten des Stellsignals 18 als Funktion des Drehzahlsignals 20 in einem gut eingestellten Brenner. Sie zeigt ebenfalls wie sich das Stellsignal 18 erwartungsgemäß ändern würde, falls eine Erhöhung 39 des Sollwertsignals 30 im Normalbetrieb, und damit eine fettere Verbrennung, stattfindet.

Dabei repräsentieren die abgebildeten Flächen gewisse, je unterschiedliche Verbrennungsgehalte von Brennstoff und Luft. Die Vorderrande der oberen und unteren Fläche bilden die Kennlinien der Steuersignale 24 und 25. Sie betreffen je einen Brennstoff mit ziemlich hohem, respektiv tiefem kalorischen Wert und sind in einem Einstellverfahren aus je vier nicht-dargestellten Messpunkte als Polynomentwicklung festgelegt worden.

Im Normalbetrieb hat der Brennstoff in der Regel einen mittleren Verbrennungsgehalt. Dies ist durch die Fläche mit dem gestreichelten Rand dargestellt. Die Regeleinrichtung 15 regelt über die Gewichtung der Steuersignale 24 und 25 das Stellsignal 18 auf einen für die erwünschte Luftzahl nahezu optimalen Wert 33 ab. Diese Feinregelung entspricht eine Anpassung an unter anderem den herrschenden Verbrennungsgehalt von Brennstoff und Luft und entspricht einer vertikalen Bewegung in der Figur 3.

Findet jetzt ein schrittartiger Anstieg der Leistungsanforderung 22 und eine entsprechende Änderung des Drehzahlsignals 20 statt, dann bleibt die Gewichtung der beiden Steuersignale 24, 25 vorerst kaum berührt. Die Steuersignale 24 und 25 selbst aber steigen je rasch mit der Drehzahländerung auf ihre entsprechend höheren Werte entlang die Kennlinien an, und das Stellsignal 18 steigt ebenso rasch zu dem Wert 34 mit. Dieser gesteuerter Wert 34 des Stellsignals 18 ist normalerweise schon sehr genau, das heißt, ist nahe an einem für die erwünschte Luftzahl optimalen Wert.

Sobald das lonisationssignal 13 sich wieder auf den neuen Zustand eingespielt hat, typisch nach einigen wenigen Sekunden, regelt es die Gewichtung der Steuersignale 24 und 25 wieder fein ab, und es bewegt sich in der Figur 3 das Stellsignal 18 dabei normalerweise nur sehr wenig vertikal.

Sollte das Stellsignal 18 sich allerdings auf einem abweichenden Wert 35 ausregeln, so ist eine Fehlermeldung oder Korrektur des Sollwertsignals 30 erforderlich. Eine alternative Kalibriereinheit nach der Erfindung nützt diese Genauigkeit der Steuersignale 24 und 25 durch Feststellung des Stellsignals 18 kurz nach der Drehzahländerung, und dann nochmals nachdem das System eingeschwungen ist.

Die Kalibriereinheit 36 jedoch steuert am Anfang einer Kalibrierung zuerst die Luftgebläsedrehzahl und das Sollwertsignal 30 auf Werte, die bei einem gut eingestellten Brenner einem Punkt 37 in Figur 3 entsprechen. Man darf in der Praxis davon ausgehen, dass das System somit in ein empfindlicheres Arbeitsgebiet gebracht worden ist.

Nach Erfassung des eingeschwungenen Regelwertes x als Indiz für den momentanen Verbrennungsgehalt von Brennstoff und Luft erhöht die Kalibriereinheit 36 in einem zweiten Schritt das Sollwertsignal 30 nochmals, was bei einem gut eingestellten Brenner der Bewegung zu einem Punkt 38 entspricht.

Der Erwartungswert 40 für die letztgenannte Änderung des Regelwertes x entspricht damit dem Höhenunterschied zwischen den Punkten 37 und 38 in Figur 3. Er wird zum Anfangswert des Regelwertes x aufaddiert. Nach 12 Sekunden findet ein Vergleich mit dem tatsächlich geänderten Regelwert x statt. Dies führt etwaig zu Korrekturmaßnahmen oder Fehlersignalen.

Die für die Berechnung des Erwartungswertes 40 benötigten Kenndaten wurden zuvor in einem Einstellverfahren anhand von Regelwertmessungen bei insgesamt drei unterschiedlichen, bekannten Verbrennungsgehalten von Brennstoff und Luft hergeleitet.

Dazu wurde jeweils das Sollwertsignal 30 mit den gleichen Schritten von seinem Wert im Normalbetrieb erhöht, zuerst um das empfindlichere Arbeitsgebiet zu erreichen und dann um die nachfolgende Änderung des Regelwertes x zu ermitteln. In Figur 3 sind die den Messungen des Regelwertes x entsprechenden Stellsignalwerte durch kleine Kreisel dargestellt.

In der Tat findet man so die Konstanten einer genauen Polynomentwicklung dritter Ordnung des eingeschwungenen Regelwertes x für das zu erwartende Maß seiner Änderung. Der eingeschwungene Regelwert x repräsentiert den herrschenden Verbrennungsgehalt von Brennstoff und Luft. Es hat sich gezeigt, dass er den Verbrennungsgehalt ausreichend genau repräsentiert, sogar falls die Luftzahl im Normalbetrieb von der erwünschten Luftzahl abweicht, oder falls der Verbrennungsgehalt von Brennstoff und Luft sich während einer Kalibrierung noch im üblichen Rahmen ändern sollte.

Obwohl für einfache Kalibrierungen überflüssig, kann man alternativ das Einstellverfahren dadurch verfeinern, dass man zudem Kenndaten bei verschiedenen Größen der Drehzahl ermittelt. Die Kalibrierung wird auch bei diesen Drehzahlen ausgeführt.

Eine alternative Kalibriereinheit nach der Erfindung kann unter anderem auf diese Weise den Grund eines etwaigen Fehlers feststellen, nämlich insbesondere ob der Strömungswiderstand von Luft oder Brennstoff sich geändert hat. Damit in so einem Fall die Leistung rückgängig korrigiert wird, eicht die alternative Kalibrierungseinheit das Drehzahlsignal 20 neu. Dies betrifft nicht nur die Kennlinie zur Erzeugung des Sollwertsignals 30, aber zum Beispiel auch die beide Kennlinien der Steuersignale 24 und 25.

## Patentansprüche

1. Regeleinrichtung für einen Brenner
mit zumindest einer im Flammenbereich des Brenners angeordneten lonisationselektrode (16) und
mit einem Stellglied (17), welches die Zufuhrmenge von Brennstoff oder Luft in Abhängigkeit von einem Stellsignal (18) beeinflusst,
wobei die Regeleinrichtung zumindest ausgestattet ist mit einem der lonisationselektrode (16) nachgeschalteten lonisationsauswerter (14), welcher ein lonisationssignal (13) erzeugt,
mit einem Regler (26), welcher einen Regelwert x als Maß für das Stellsignal (18) zumindest zeitweise in Abhängigkeit vom lonisationssignal (13) erzeugt, und **dass** der Regelwert x einer Kalibriereinheit (36) zugeführt wird,
**dadurch gekennzeichnet, dass** die Kalibriereinheit (36) ein- oder mehrmalig nach Änderung eines Regelsollwertes die darausfolgende Änderung des Regelwertes x feststellt
und **dass** die Kalibriereinheit (36) anhand von
in der Regeleinrichtung (15) gespeicherten Kenndaten einen Erwartungswert (40) für den geänderten Regelwert x bestimmt und **dass**
die Kalibriereinheit (36) wenigstens einen Vergleich zwischen der festgestellten Änderung des Regelwertes x und dem Erwartungswert (40) durchführt und das abhängig vom Vergleichsergebnis
die Kalibriereinheit (36) den in der Regeleinrichtung gespeicherten Regelsollwert mittels einem oder mehreren aus dem Vergleich erhaltenen Differenzwerten neu bestimmt oder ein Störsignal erzeugt.

2. Regeleinrichtung für einen Brenner nach Anspruch 1,
**dadurch gekennzeichnet, dass**
der Regelwert x während seiner Änderung durch die lonisationselektrode (16) beeinflusst wird.

3. Regeleinrichtung für einen Brenner nach einem der vorgehenden Ansprüche,
**dadurch gekennzeichnet, dass**
die Kenndaten zur Bestimmung des Erwartungswertes (40) Kenndaten zur Bestimmung des zu erwartenden Verhaltens des Regelwertes x bei unterschiedlichen Verbrennungsgehalten von Brennstoff und Luft umfassen.

4. Regeleinrichtung für einen Brenner nach einem der vorgehenden Ansprüche,
**dadurch gekennzeichnet, dass**
die Kalibriereinheit vor ihren respektiven Änderungen den Regelsollwert und den Regelwert x auf ihre respektiven Anfangswerte bringt.

5. Regeleinrichtung für einen Brenner nach Anspruch 4,
**dadurch gekennzeichnet, dass**
der neu zu bestimmende Regelsollwert einen in der Regeleinrichtung gespeicherten Anfangswert für den Regelsollwert umfasst.

6. Regeleinrichtung für einen Brenner nach einem der vorgehenden Ansprüche,
**dadurch gekennzeichnet, dass**
der neu zu bestimmende Regelsollwert, die Abhängigkeit des Reglers vom Leistungssignal (20, 22) beeinflusst.

7. Verfahren zum Einstellen einer Regeleinrichtung für einen Brenner
mit zumindest einer im Flammenbereich des Brenners angeordneten lonisationselektrode (16) und
mit einem Stellglied (17), welches die Zufuhrmenge von Brennstoff oder Luft in Abhängigkeit von einem Stellsignal (18) beeinflusst,
wobei die Regeleinrichtung zumindest ausgestattet ist mit einem der lonisationselektrode (16) nachgeschalteten lonisationsauswerter (14), welcher ein lonisationssignal (13) erzeugt,
mit einem Regler (26), welcher einen Regelwert x als Maß für das Stellsignal (18) zumindest zeitweise in Abhängigkeit vom lonisationssignal (13) erzeugt und **dass** der Regelwert x einer Kalibriereinheit (36) zugeführt wird,
**dadurch gekennzeichnet, dass** man während einer Kalibrierung
ein- oder mehrmalig den Brenner betreibt und dabei einen Regelsollwert ändert und die darausfolgende Änderung des Regelwertes x ermittelt und das während der Kalibrierung Kenndaten zur Bestimmung eines Erwartungswertes (40) für den geänderten Regelwert x hergeleitet und in der Regeleinrichtung gespeichert werden.

8. Verfahren zum Einstellen einer Regeleinrichtung nach Anspruch 7,
**dadurch gekennzeichnet, dass**
man den Brenner zumindest einmal auch mit einem Brennstoff mit einem unterschiedlichen Verbrennungsgehalt betreibt.

9. Verfahren zum Einstellen einer Regeleinrichtung nach Anspruch 7 oder 8,
**dadurch gekennzeichnet, dass**
man den Brenner zumindest einmal vor dem Betrieb so einstellt, **dass** die Verbrennung vor der Änderung des Regelsollwertes nicht mehr die erwünschte Luftzahl aufweist und / oder die erwünschte Leistung erzeugt, und
man am Ende eines solchen Betriebs die Verbrennung **dadurch** verbessert, **dass** man den Regelsollwert neu bestimmt.

10. Verfahren zum Einstellen einer Regeleinrichtung nach Anspruch 9,
**dadurch gekennzeichnet, dass**
man den Brenner vor dem Betrieb **dadurch** einstellt, **dass** man einen zusätzlichen Widerstand in Serie zu der lonisationselektrode (16) schaltet.

## Claims

1. Control apparatus for a burner,
having at least one ionization electrode (16) disposed in the flame region of the burner, and
having an actuating element (17), which influences the feed quantity of fuel or air in dependence upon an actuating signal (18),
the control apparatus at least being equipped with an ionization analyzer (14), which is connected downstream of the ionization electrode (16) and generates an ionization signal (13),
having a controller (26), which generates a control value x as measure of the actuating signal (18), at least occasionally in dependence upon the ionization signal (13), the control value x being fed to a calibrating unit (36),
**characterized in that** the calibrating unit (36) establishes one or more times after the change in a control set value the consequential change in the control value x,
and **in that** the calibrating unit (36) determines, on the basis of characteristic data stored in the control apparatus (15), an expectancy value (40) for the changed control value x, and **in that**
the calibrating unit (36) performs at least one comparison between the established change in the control value x and the expectancy value (40), and **in that**, independently from the comparison result,
the calibrating unit (36) newly determines, by means of one or more differential values acquired from the comparison, the control set value stored in the control apparatus, or generates a disturbance signal.

2. Control apparatus for a burner according to Claim 1, **characterized in that** the control value x is influenced during its change by the ionization electrode (16).

3. Control apparatus for a burner according to one of the preceding claims, **characterized in that** the characteristic data for determining the expectancy value (40) comprise characteristic data for determining the anticipated behaviour of the control value x in respect of different combustion contents of fuel and air.

4. Control apparatus for a burner according to one of the preceding claims, **characterized in that** the calibrating unit brings the control set value and the control value x, prior to their respective changes, to their respective starting values.

5. Control apparatus for a burner according to Claim 4, **characterized in that** the newly to be determined control set value comprises a starting value, stored in the control apparatus, for the control set value.

6. Control apparatus for a burner according to one of the preceding claims, **characterized in that** the newly to be determined control set value influences the dependence of the controller upon the output signal (20, 22).

7. Method for adjusting a control apparatus for a burner having at least one ionization electrode (16) disposed in the flame region of the burner, and
having an actuating element (17), which influences the feed quantity of fuel or air in dependence upon an actuating signal (18),
the control apparatus at least being equipped with an ionization analyzer (14), which is connected downstream of the ionization electrode (16) and generates an ionization signal (13),
having a controller (26), which generates a control value x as measure of the actuating signal (18), at least occasionally in dependence upon the ionization signal (13), the control value x being fed to a calibrating unit (36),
**characterized in that**, during a calibration, the burner is operated one or more times and a control set value is hereupon changed and the consequential change in the control value x determined,
and **in that**, during the calibration, characteristic data for determining an expectancy value (40) for the changed control value x are derived and are stored in the control apparatus.

8. Method for adjusting a control apparatus according to Claim 7, **characterized in that** the burner is also operated at least once with a fuel having a different combustion content.

9. Method for adjusting a control apparatus according to Claim 7 or 8, **characterized in that** the burner is adjusted at least once prior to operation such that the combustion, prior to the change in the control set value, no longer exhibits the desired air/fuel ratio and/or generates the desired output, and, at the end of such an operation, the combustion is improved by the control set value being newly determined.

10. Method for adjusting a control apparatus according to Claim 9, **characterized in that** the burner is adjusted prior to operation by an additional resistance being connected in series to the ionization electrode (16).

## Revendications

1. Dispositif de réglage pour un brûleur
avec au moins une électrode d'ionisation (16) placée dans la zone de la flamme du brûleur et
avec un organe de réglage (17) qui influence la quantité amenée de combustible ou d'air en fonction d'un signal de réglage (18),
le dispositif de réglage étant équipé au moins avec un évaluateur d'ionisation (14) qui est branché en aval de l'électrode d'ionisation (16) et qui produit un signal d'ionisation (13),
avec un régulateur (26) qui produit une valeur de réglage x comme mesure du signal de réglage (18) au moins de temps en temps en fonction du signal d'ionisation (13), laquelle valeur de réglage x est envoyée à une unité de calibrage (36),
**caractérisé en ce que** l'unité de calibrage (36), une fois ou plusieurs fois après une variation d'une valeur de consigne de réglage, constate la variation consécutive de la valeur de réglage x,
**en ce que** l'unité de calibrage (36) détermine à l'aide de données caractéristiques mémorisées dans le dispositif de réglage (15) une valeur escomptée (40) pour la valeur de réglage modifiée x,
**en ce que** l'unité de calibrage (36) effectue au moins une comparaison entre la variation constatée de la valeur de réglage x et la valeur escomptée (40)
et **en ce que**, en fonction du résultat de la comparaison, l'unité de calibrage (36) détermine à nouveau la valeur de consigne de réglage mémorisée dans le dispositif de réglage au moyen d'une ou plusieurs valeurs de différence obtenues par la comparaison ou produit un signal de panne.

2. Dispositif de réglage pour un brûleur selon la revendication 1,
**caractérisé en ce que**
la valeur de réglage x est influencée pendant sa variation par l'électrode d'ionisation (16).

3. Dispositif de réglage pour un brûleur selon l'une des revendications précédentes,
**caractérisé en ce que**
les données caractéristiques pour la détermination de la valeur escomptée (40) comprennent des données caractéristiques pour la détermination du comportement escompté de la valeur de réglage x pour différentes teneurs en combustible et en air dans la combustion.

4. Dispositif de réglage pour un brûleur selon l'une des revendications précédentes,
**caractérisé en ce que**
l'unité de calibrage amène avant leurs variations respectives la valeur de consigne de réglage et la valeur de réglage x à leurs valeurs initiales respectives.

5. Dispositif de réglage pour un brûleur selon la revendication 4,
**caractérisé en ce que**
la nouvelle valeur de consigne de réglage à déterminer comprend une valeur initiale, mémorisée dans le dispositif de réglage, pour la valeur de consigne de réglage.

6. Dispositif de réglage pour un brûleur selon l'une des revendications précédentes,
**caractérisé en ce que**
la nouvelle valeur de consigne de réglage à déterminer influence la dépendance du régulateur au signal de puissance (20, 22).

7. Procédé pour le réglage d'un dispositif de réglage pour un brûleur
avec au moins une électrode d'ionisation (16) placée dans la zone de la flamme du brûleur et
avec un organe de réglage (17) qui influence la quantité amenée de combustible ou d'air en fonction d'un signal de réglage (18),
le dispositif de réglage étant équipé au moins avec un évaluateur d'ionisation (14) qui est branché en aval de l'électrode d'ionisation (16) et qui produit un signal d'ionisation (13),
avec un régulateur (26) qui produit une valeur de réglage x comme mesure du signal de réglage (18) au moins de temps en temps en fonction du signal d'ionisation (13), laquelle valeur de réglage x est envoyée à une unité de calibrage (36),
**caractérisé en ce que**, pendant un calibrage, on fait fonctionner une ou plusieurs fois le brûleur et on modifie ce faisant une valeur de consigne de réglage et on détermine la variation consécutive de la valeur de réglage x et **en ce que**, pendant le calibrage, on déduit des données caractéristiques pour la détermination d'une valeur escomptée (40) pour la valeur de réglage modifiée x et on les mémorise dans le dispositif de réglage.

8. Procédé pour le réglage d'un dispositif de réglage selon la revendication 7,
**caractérisé en ce que**
l'on fait fonctionner le brûleur au moins une fois aussi avec un combustible ayant une teneur différente dans la combustion.

9. Procédé pour le réglage d'un dispositif de réglage selon la revendication 7 ou 8,
**caractérisé en ce que**
l'on règle le brûleur au moins une fois avant le fonctionnement de telle sorte que la combustion avant la variation de la valeur de consigne de réglage n'a plus le facteur d'air souhaité et/ou ne produit plus la puissance souhaitée et **en ce que**, à la fin d'un fonctionnement de ce type, on améliore la combustion en déterminant à nouveau la valeur de consigne de réglage.

10. Procédé pour le réglage d'un dispositif de réglage selon la revendication 9,
**caractérisé en ce que**
l'on règle le brûleur avant le fonctionnement en branchant une résistance supplémentaire en série avec l'électrode d'ionisation (16).
